# EUROPÄISCHE PATENTANMELDUNG

(11) **EP 4 574 871 A1**
(43) Veröffentlichungstag der Anmeldung: **25.06.2025**
(21) Anmeldenummer: 23219507.3
(22) Anmeldetag: 21.12.2023
(51) Int. Cl.: C08G 18/28, C08G 18/48, C08G 18/73, C08G 18/76, C08G 18/78, C08G 18/79, C09D 175/08, C09J 175/08, C08K 3/08

(54) **HÄRTBARE POLYMERZUSAMMENSETZUNGEN ENTHALTEND ALDIMINE, POLYISOCYANATE UND VERBINDUNGEN MIT AKTIVIERTEN METHYLEN-GRUPPEN**

(71) Anmelder: Sika Technology AG, 6340 Baar (CH)
(72) Erfinder: HÄBERLE, Hans, 78262 Gailingen (DE); BURCKHARDT, Urs, 8049 Zürich (CH); SCHEURER, Rouven, 8483 Kollbrunn (CH)
(74) Vertreter: Sika Patent Attorneys

(57) **Zusammenfassung**

Gegenstand der Erfindung ist eine härtbare Zusammensetzung umfassend mindestens ein Aldimin **L** mit Aldimingruppen der Formel (I), gegebenenfalls mindestens ein Polyol, mindestens ein Polyisocyanat und mindestens eine Verbindung **V** mit aktivierten Methylengruppen der Formel (II), wobei bezogen auf die gesamte Zusammensetzung das Verhältnis der Anzahl Isocyanatgruppen zur Summe der Anzahl Aldimingruppen plus Hydroxylgruppen mindestens 0.9 beträgt, und wobei das Verhältnis der Anzahl aktivierte Methylengruppen der Formel (II) zur Anzahl Aldimingruppen der Formel (I) mindestens 1 beträgt.

Die Zusammensetzung ist besonders geeignet als elastische Beschichtung mit hoher Festigkeit, als zähelastische Beschichtung mit besonders geringer Neigung zu Blasenbildung oder als zähelastischer Klebstoff. Sie härtet mit einfach zugänglichen Aldiminen abgeleitet von flüchtigen Aldehyden wie Benzaldehyd ohne Gerüche zu einem hochwertigen Polymer mit hohem Weiterreisswiderstand.

## Beschreibung

### Technisches Gebiet

Die Erfindung betrifft härtbare Zusammensetzungen enthaltend ein Aldimin, ein Polyisocyanat und eine Verbindung mit aktivierten Methylengruppen, sowie ihre Verwendung als elastische bis zähelastische Beschichtung oder Klebstoff.

### Stand der Technik

Typische Polyurethanbeschichtungen und -klebstoffe bestehen aus einer PolyolKomponente und einer Isocyanat-Komponente, welche für die Anwendung vermischt und appliziert werden. Dabei wird die Härtungsreaktion (Urethanbildung) typischerweise durch ein tertiäres Amin und/oder eine metallorganische Verbindung katalysiert. Insbesondere bei Beschichtungsanwendungen besteht dabei die Schwierigkeit, dass das aushärtende Material aufgrund der geringen Schichtdicke und grossen Oberfläche intensiv mit Feuchtigkeit aus der Umgebung in Kontakt kommt. Dabei kann Feuchtigkeit in Konkurrenz zu den Polyolen mit Isocyanatgruppen reagieren und dabei Blasenbildung und Aushärtungsstörungen wegen unvollständiger Vernetzung verursachen. Dies kann durch den Einsatz von selektiveren Metall-Katalysatoren verbessert werden, wobei Katalysatoren auf Quecksilberbasis aus Toxizitätsgründen nicht einsetzbar sind und Komplexverbindungen von Bismuth, Zink oder Zirkonium aufgrund ihrer hohen Aktivität und hohen Hydrolyseempfindlichkeit schwierig in der Anwendung sind.

Weiterhin können Verbesserungen in der Feuchteempfindlichkeit solcher Polyurethanbeschichtungen über einen Anteil an Aminhärter in der Polyolkomponente erreicht werden. In freier Form sind die meisten Aminhärter aber zu reaktiv und verursachen Schwierigkeiten bei der Applikation, etwa durch Inhomogenitäten beim Vermischen, zu kurze Offenzeiten oder beim Haftungsaufbau eines Klebstoffs durch ungenügende Benetzung der Substratoberfläche. Um dies zu verbessern, können Aminhärter in blockierter, hydrolytisch aktivierbarer Form, als sogenannte latente Härter, eingesetzt werden, beispielsweise als Ketimine oder Aldimine. Diese setzen bei der Aushärtung aber ein Keton oder Aldehyd frei, welches einen unerwünschten Geruch und Emissionen verursacht oder als Weichmacher in der ausgehärteten Zusammensetzung verbleibt, wo es die Festigkeit der ausgehärteten Zusammensetzung stark reduzieren oder Probleme mit Migration, Ausschwitzen oder Substratverschmutzungen verursachen kann.

US 2015/0259465 beschreibt Zusammensetzungen mit einer Polyol- und einer Isocyanatkomponente, welche zusätzlich Polyaldimine und spezielle Metallkatalysatoren enthalten. Die Probleme mit Geruch und/oder Weichmacher- und Migrationseffekten durch die freigesetzten Aldehyde werden hierbei nicht gelöst.

US 5,288,804 beschreibt härtbare Zusammensetzungen enthaltend Polyacetoacetate und Aldimine. Sie enthalten keine Polyisocyanate und bilden keine elastischen Polymere, wie sie für Polyurethane typisch sind.

WO 2017/044726 beschreibt Beschichtungen, insbesondere Korrosionsschutzlacke, bei welchen Polyacetoacetate mit Polyisocyanaten ausgehärtet werden. Dabei entstehen ebenfalls keine elastischen Polymere, wie sie für Polyurethane typisch sind.

### Darstellung der Erfindung

Aufgabe der Erfindung ist es, eine Polymerzusammensetzung zur Verfügung zu stellen, welche störungsfrei und mit genügend langer Offenzeit applizierbar ist, ohne Blasenbildung, Gerüche, Emissionen oder weichmachende Abspalter aushärtet und geeignet ist als Beschichtung oder Klebstoff.

Diese Aufgabe wird mit einer härtbaren Zusammensetzung wie in Anspruch 1 beschrieben gelöst. Die Zusammensetzung umfasst mindestens ein Aldimin **L** mit Aldimingruppen der Formel (I), gegebenenfalls mindestens ein Polyol, mindestens ein Polyisocyanat und mindestens eine Verbindung **V** mit aktivierten Methylengruppen der Formel (II), insbesondere Cyanoacetat-, Acetoacetat- oder Malonatgruppen. Überraschenderweise wird das Aldimin **L** durch die Verbindung **V** so aktiviert, dass die Aldimingruppen für die Reaktion mit dem Polyisocyanat verfügbar sind und Harnstoffbindungen entstehen. Es findet dabei überraschenderweise keine Aldiminhydrolyse statt, das heisst, es wird keine Feuchtigkeit benötigt, um die Aldimingruppen zu aktivieren und für die Reaktion mit Isocyanatgruppen zugänglich zu sein. Zudem wird offenbar kein Aldehyd freigesetzt, denn auch bei Aldiminen basierend auf flüchtigen Aldehyden wie Benzaldehyd ist bei der Aushärtung kein Aldehyd-Geruch feststellbar. Es kann vermutet werden, dass bei der Aushärtung ein Addukt aus Verbindung **V** und dem Aldehyd-Rest in der ausgehärteten Zusammensetzung verbleibt, wobei keine Geruchsimmissionen, Weichmachereffekte oder Migrationseffekte beobachtet werden. Die erfindungsgemässe Zusammensetzung ermöglicht die Verwendung von Aldiminen, welche abgeleitet sind von breit verfügbaren, kostengünstigen Aldehyden wie insbesondere Benzaldehyd, ohne dass dabei die unerwünschte Geruchsproblematik auftritt. Überraschenderweise härtet die erfindungsgemässe Zusammensetzung nicht nur geruchsfrei aus, sondern zeigt eine deutlich reduzierte Neigung zu Blasenbildung und/oder besonders gute mechanische Eigenschaften, insbesondere eine höhere Festigkeit und Härte und einen höheren Weiterreisswiderstand bei gleichbleibend guter Dehnbarkeit.

Die erfindungsgemässe härtbare Zusammensetzung ermöglicht elastische Beschichtungen mit hoher Festigkeit bei hoher Dehnbarkeit, zähelastische hochfeste Beschichtungen mit besonders geringer Neigung zu Blasenbildung sowie zähelastische Klebstoffe mit guter Phasensegregation und besonders tiefer Glasübergangstemperatur, wodurch die mechanischen Eigenschaften solcher Klebstoffe in einem weiten Temperaturbereich besonders wenig abhängig von der herrschenden Temperatur sind. Dies erleichtert die Verwendung solcher Klebstoffe für tragende Verklebungen an beispielsweise Fahrzeugen, welche im Gebrauch grossen Temperaturschwankungen ausgesetzt sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- mindestens ein Aldimin L mit Aldimingruppen der Formel (I), 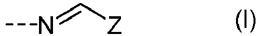 wobei Z für einen organischen Rest mit 1 bis 25 C-Atomen steht,
- gegebenenfalls mindestens ein Polyol,
- mindestens ein Polyisocyanat, und
- mindestens eine Verbindung **V** mit aktivierten Methylengruppen der Formel (II), 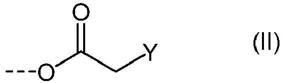 wobei Y für einen Rest der Formel ---CN , 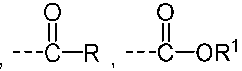 oder 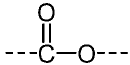 steht, R für einen einwertigen Kohlenwasserstoffrest mit 1 bis 10 C-Atomen steht und R¹ für einen Alkylrest mit 1 bis 6 C-Atomen steht,
wobei bezogen auf die gesamte Zusammensetzung das Verhältnis der Anzahl Isocyanatgruppen zur Summe der Anzahl Aldimingruppen plus Hydroxylgruppen mindestens 0.9 beträgt und das Verhältnis der Anzahl aktivierte Methylengruppen der Formel (II) zur Anzahl Aldimingruppen der Formel (I) mindestens 1 beträgt.

Eine gestrichelte Linie in den Formeln in diesem Dokument stellt jeweils die Bindung zwischen einem Substituenten und dem zugehörigen Molekülrest dar.

Mit "Poly" beginnende Substanznamen wie Polyisocyanat oder Polyol bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt.

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "NCO-Gehalt" wird der Gehalt an Isocyanatgruppen in Gewichts-% bezeichnet. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen.

Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt hat das Aldimin **L** zwei bis drei Aldimingruppen der Formel (I).

Bevorzugt hat das Aldimin **L ein** Aldimin-Equivalentgewicht, oder im Fall eines oligomeren oder polymeren Aldimin **L** mittleres Aldimin-Equivalentgewicht, von 110 bis 2'500 g/eq.

Bevorzugt steht Z für einen über ein primäres oder sekundäres C-Atom gebundenen aliphatischen Kohlenwasserstoffrest mit 3 bis 11 C-Atomen oder für einen aromatischen oder heteroaromatischen fünf- oder sechsgliedrigen Ring, der gegebenenfalls substituiert und/oder anelliert ist und insgesamt 4 bis 25 C-Atome umfasst.

Insbesondere ist Z ausgewählt aus der Liste bestehend aus 1-Propyl, 2-Propyl, 1-Butyl, 1-Pentyl, 1-Heptyl, 3-Heptyl, 1-Undecyl, Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 2,4,6-Trimethylphenyl, 2,4,5-Trimethoxyphenyl, 2,4,6-Trimethoxyphenyl, 3,4,5-Trimethoxyphenyl, 1-Naphthyl, 2-Naphthyl, 2-Furyl, 5-Methyl-2-furyl, Thiophen, Pyridin, Pyrrol und Chinolin.

Davon bevorzugt sind Phenyl, die isomeren Methylphenyle, 4-C₁₀₋₁₄-Alkylphenyl, 4-Methoxyphenyl, 3,4-Dimethoxyphenyl oder 2-Furyl.

Am meisten bevorzugt steht Z für Phenyl. Solche Aldimine sind abgeleitet von Benzaldehyd. Sie sind besonders einfach zugänglich und ermöglichen eine besonders schnelle und zuverlässige Aushärtung.

Aldimine abgeleitet von flüchtigen Aldehyden wie Benzaldehyd verursachen bei der Anwendung als latenter Härter in Isocyanatgruppen-haltigen Zusammensetzungen einen starken, unangenehmen Geruch. Dieser schränkt die Anwendbarkeit solcher Zusammensetzungen stark ein, da der Geruch schon während der Applikation auftritt und auch noch lange danach anhält. Mit der erfindungsgemässen Zusammensetzung hingegen entsteht überraschenderweise kein Aldehyd-Geruch, was besonders vorteilhaft ist, da die Zusammensetzung ohne Einschränkung auch in geruchssensitiven Anwendungen eingesetzt werden kann, beispielsweise in Gebäudeinnenräumen oder in Automobilen.

In einer bevorzugten Ausführungsform der Erfindung ist das Aldimin **L** ein Aldimin der Formel (III a), 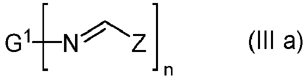 wobei n für 2 oder 3 steht, G¹ für einen zwei- oder dreiwertigen Polyoxyalkylen-Rest mit einem mittleren Molekulargewicht Mₙ von 800 bis 6'000 g/mol steht und Z die bereits genannten Bedeutungen aufweist.

Ein Aldimin der Formel (III a) ist typischerweise abgeleitet von einem Polyoxyalkylendiamin oder -triamin und einem Aldehyd der Formel 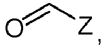 aus welchen es durch eine Kondensationsreaktion erhältlich ist.

Bevorzugt als Polyoxyalkylendiamin oder-triamin sind Polyoxypropylendiamine oder -triamine, insbesondere Jeffamine^{®} D-2000, Jeffamine^{®} D-4000 oder Jeffamine^{®} T-5000 (alle von Huntsman), oder entsprechende Typen von BASF oder Nitroil.

Insbesondere ist ein Aldimin der Formel (III a) ausgewählt aus der Liste bestehend aus N,N'-Dibenzylidenpolyoxypropylendiaminen und N,N',N"-Tribenzylidenpoly-oxypropylentriaminen und den analogen Aldiminen abgeleitet von Tolualdehyd, einem 4-C₁₀₋₁₄-Alkylbenzaldehyd-Gemisch, 4-Methoxybenzaldehyd und Furfural anstelle von Benzaldehyd.

Eine härtbare Zusammensetzung enthaltend ein Aldimin der Formel (III a) kann ganz ohne Polyol formuliert sein. Bei der Aushärtung entsteht dabei ein Polyharnstoff. Damit können beispielsweise Beschichtungen mit hoher Beständigkeit gegen Hitze, Feuchtigkeit und Abrasion erhalten werden.

In einer weiteren bevorzugten Ausführungsform der Erfindung ist das Aldimin L ein Aldimin der Formel (III b), 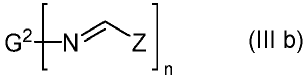 wobei n für 2 oder 3 steht, G² für einen n-wertigen organischen Rest mit 2 bis 25 C-Atomen steht und Z die bereits genannten Bedeutungen aufweist.

Bevorzugt steht G² für einen zweiwertigen Kohlenwasserstoffrest mit 2 bis 15 C-Atomen, insbesondere 5 bis 15 C-Atomen, oder für einen zwei- oder dreiwertigen Polyoxyalkylen-Rest mit einem mittleren Molekulargewicht Mₙ von 160 bis 500 g/mol.

Das Aldimin der Formel (III b) ist typischerweise abgeleitet von einem primären Amin und einem Aldehyd der Formel 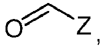 aus welchen es durch eine Kondensationsreaktion erhältlich ist.

Als primäres Amin bevorzugt sind handelsübliche aliphatische oder cycloaliphatische primäre Amine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-methylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)-methan, 2,5(6)-Bis(aminomethyl)bicyclo[2.2.1]heptan (NBDA), 3(4),8(9)-Bis(aminomethyl)tricyclo[5.2.1.0^{2,6}]decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 500 g/mol und Polyoxypropylentriaminen mit einem mittleren Molekulargewicht Mₙ von 300 bis 500 g/mol.

Bevorzugte Polyoxypropylendi- oder-triamine sind Jeffamine^{®} D-230, Jeffamine^{®} D-400 oder Jeffamine^{®} T-403 (alle von Huntsman), sowie entsprechende Typen von BASF oder Nitroil.

Als Aldehyd der Formel 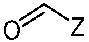 bevorzugt sind Butanal, Isobutyraldehyd, Valeraldehyd, Hexanal, Octanal, 2-Ethylhexanal, Dodecanal, Benzaldehyd, 2-Tolualdehyd, 3-Tolualdehyd, 4-Tolualdehyd, 4-Ethylbenzaldehyd, 4-Isopropyl-benzaldehyd, 4-tert-Butylbenzaldehyd, 4-C₁₀₋₁₄-Alkylbenzaldehyd, 2,5-Dimethylbenzaldehyd, 2-Methoxybenzaldehyd, 3-Methoxybenzaldehyd, 4-Methoxybenzaldehyd, 2-Ethoxybenzaldehyd, 3-Ethoxybenzaldehyd, 4-Ethoxybenzaldehyd, 4-Propoxybenzaldehyd, 4-Isopropoxybenzaldehyd, 4-Butoxybenzaldehyd, 4-Pentoxybenzaldehyd, 4-Decyloxybenzaldehyd, 4-Dodecyloxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 2,4,6-Trimethylbenzaldehyd, 2,4,5-Trimethoxybenzaldehyd, 2,4,6-Trimethoxybenzaldehyd, 3,4,5-Trimethoxybenzaldehyd, 1-Naphthaldehyd, 2-Naphthaldehyd, Furfural oder 5-Methylfurfural.

Davon bevorzugt sind aromatische oder heteroaromatische Aldehyde.

Besonders bevorzugt ist Benzaldehyd, die isomeren Tolualdehyde, ein 4-C₁₀₋₁₄-Alkylbenzaldehyd-Gemisch, 4-Methoxybenzaldehyd, 3,4-Dimethoxybenzaldehyd oder Furfural.

Am meisten bevorzugt ist Benzaldehyd.

Aldimine der Formel (III b) abgeleitet von aromatischen Aldehyden wie insbesondere Benzaldehyd zeigen teilweise eine deutliche Neigung zum Kristallisieren. Bevorzugt sind Aldimine der Formel (III b), welche als solche oder als Mischung untereinander bei Raumtemperatur ohne Zusatz von Lösemitteln oder Verdünnern dauerhaft flüssig sind. Solche Aldimine ermöglichen Zusammensetzungen mit geringer Emission.

Besonders bevorzugte ist das Aldimin der Formel (III b) ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Dibenzylidenisophorondiamin, N,N'-Dibenzyliden-4,4'-methylen-bis(cyclohexylamin), N,N'-Dibenzylidenpolyoxypropylendiaminen mit mittlerem Molekulargewicht Mₙ von 350 bis 750 g/mol und N,N',N"-Tribenzylidenpolyoxypropylentriaminen mit mittlerem Molekulargewicht Mₙ von 450 bis 700 g/mol, sowie den analogen Aldiminen abgeleitet von Tolualdehyd, einem 4-C₁₀₋₁₄-Alkylbenzaldehyd-Gemisch, 4-Methoxybenzaldehyd und Furfural anstelle von Benzaldehyd.

Davon bevorzugt sind N,N'-Dibenzyliden-1,5-pentandiamin, N,N'-Dibenzyliden-2-methyl-1,5-pentandiamin, N,N'-Dibenzyliden-1,6-hexandiamin, N,N'-Dibenzyliden-2,2(4),4-trimethyl-1,6-hexandiamin, N,N'-Dibenzylidenpolyoxypropylendiaminen mit mittlerem Molekulargewicht Mₙ von 350 bis 700 g/mol oder N,N'-Bis(4-C₁₀₋₁₄-Alkyl-benzyliden)isophorondiamin.

In einer bevorzugten Ausführungsform der Erfindung enthält die härtbare Zusammensetzung mindestens ein Polyol **P** mit einer OH-Zahl von 14 bis 280 mg KOH/g, bevorzugt 28 bis 112 mg KOH/g.

Bevorzugt weist das Polyol **P** ein mittleres Molekulargewicht Mₙ von 400 bis 10'000 g/mol, insbesondere 1'000 bis 6'000 g/mol, auf.

Bevorzugt weist das Polyol **P** eine mittlere OH-Funktionalität im Bereich von 1.6 bis 3, besonders bevorzugt 1.8 bis 3, insbesondere 2.2 bis 3, auf.

Bevorzugt weist das Polyol **P** zumindest teilweise primäre Hydroxylgruppen auf. Solche Polyole sind mit Isocyanaten besonders reaktiv.

Bevorzugt ist das Polyol **P** bei Raumtemperatur flüssig.

Als Polyol **P** geeignet sind handelsübliche Polyole, insbesondere
- Polyetherpolyole, insbesondere Polyoxyalkylendiole und/oder Polyoxyalkylentriole, wobei Triole bevorzugt gestartet sind auf 1,1,1-Trimethylolpropan oder Glycerin, sowie Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD),
- Polyesterpolyole, insbesondere aus der Polykondensation von Hydroxycarbonsäuren bzw. Lactonen oder der Polykondensation von aliphatischen und/oder aromatischen Polycarbonsäuren mit zwei- oder mehrwertigen Alkoholen, oder Veresterungsprodukte von Dimer- oder Trimerfettsäuren,
- Polycarbonatpolyole,
- Polyetherpolyesterpolyole,
- Polyacrylat- oder Polymethacrylatpolyole,
- Polyhydroxyfunktionelle Fette oder Öle, insbesondere natürliche Fette, Öle oder Derivate davon, inbesondere Umsetzungsprodukte von Rizinusöl,
- Polykohlenwasserstoffpolyole, insbesondere hydroxyfunktionelle Polyolefine, Polyisobutylene oder Polyisoprene, weiterhin hydroxyfunktionelle Ethylen-Propylen-Copolymere, Ethylen-Butylen- Copolymere oder Ethylen-Propylen-Dien-Copolymere, wie sie beispielsweise von der Firma Kraton Polymers hergestellt werden, weiterhin hydroxyfunktionelle Polymere von Dienen, insbesondere von 1,3-Butadien, weiterhin hydroxyfunktionelle Copolymere aus Dienen und Vinylmonomeren wie Styrol, Acrylnitril, Vinylchlorid, Vinylacetat, Vinylalkohol, Isobutylen oder Isopren, sowie hydrierte hydroxyfunktionelle Polymere oder Copolymere von Dienen.

Bevorzugt sind Polyetherpolyole oder Polyesterpolyole.

Polyetherpolyole ermöglichen insbesondere eine hohe Elastizität in einem grossen Temperaturbereich, während Polyesterpolyole besonders hohe Festigkeiten ermöglichen.

Besonders bevorzugte Polyetherpolyole sind Polyoxypropylenpolyole, Ethylenoxid-terminierte Polyoxypropylenpolyole oder Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).

Besonders bevorzugt sind Ethylenoxid-terminierte Polyoxypropylentriole oder Ethylenoxid-terminierte Polyoxypropylentriole enthaltend darin dispergierte Styrol-Acrylnitril-Partikeln (SAN).

Weiterhin bevorzugt sind Polyetherpolyole mit einem niedrigen Gehalt an Ungesättigtheit (sogenannte "low monol" und "ultra low monol" Polyole), insbesondere von weniger als 0.02 mEq/g, bevorzugt weniger als 0.01 mEq/g.

Besonders bevorzugte Polyesterpolyole sind Umsetzungsprodukte von Rizinusöl, wie beispielsweise Setathane^{®} D 1150 (von Allnex), oder amorphe gesättigte Polyesterdiole oder -triole, insbesondere aus der Umsetzung von Dicarbonsäuren wie insbesondere Bernsteinsäure, Glutarsäure, Adipinsäure, Pimelinsäure, Korksäure, Azelainsäure, Sebacinsäure oder Dodecandicarbonsäure, mit Alkoholen wie insbesondere 1,2-Ethandiol, Diethylenglykol, 1,2-Propandiol, 1,3-Propandiol, 2-Methyl-1,3-propandiol, Dipropylenglykol, 1,4-Butandiol, 1,5-Pentandiol, 3-Methyl-1,5-pentandiol, 1,6-Hexandiol, Neopentylglykol, 1,3-Cyclohexandimethanol, 1,4-Cyclohexandimethanol, Trimethylolpropan oder Glycerin.

Für den Fall, dass als Aldimin **L** mindestens ein Aldimin der Formel (III b) enthalten ist, enthält die härtbare Zusammensetzung bevorzugt mindestens ein Polyol **P** oder mindestens ein Aldimin der Formel (III a), insbesondere mindestens ein Polyol **P.**

Dabei liegt das Gewichtsverhältnis zwischen Aldiminen **L,** insbesondere Aldiminen der Formel (III b), und Polyolen **P** bevorzugt im Bereich von 2/98 bis 50/50, besonders bevorzugt 3/97 bis 40/60, insbesondere 4/96 bis 30/70. Eine solche härtbare Zusammensetzung verfügt über eine ausreichend lange Verarbeitungszeit und eine hohe Festigkeit bei guter Dehnbarkeit nach der Aushärtung.

Die härtbare Zusammensetzung enthält weiterhin mindestens ein Polyisocyanat.

Bevorzugt hat das Polyisocyanat einen NCO-Gehalt bezogen auf das Polyisocyanat von 8 bis 35 Gewichts-%, bevorzugt 10 bis 33 Gewichts-%.

Bevorzugt weist das Polyisocyanat eine NCO-Funktionalität oder mittlere NCO-Funktionalität von 2.1 bis 4.0 auf.

Bevorzugt als Polyisocyanat sind Oligomere oder Derivate von handelsüblichen Diisocyanaten wie insbesondere 1,5-Pentandiisocyanat (PDI), 1,6-Hexandiisocyanat (HDI), Isophorondiisocyanat (IPDI), Perhydro-2,4(6)-toluendiisocyanat (H₆TDI), Perhydro-4,4'-diphenylmethandiisocyanat (H₁₂MDI), 2,2(4),4-Trimethyl-1,6-hexandiisocyanat (TMDI), Cyclohexan-1,3-diisocyanat, Cyclohexan-1,4-diisocyanat, 1,3-Bis(isocyanatomethyl)cyclohexan, 1,4-Bis(isocyanatomethyl)cyclohexan, m-Xylendiisocyanat, p-Xylendiisocyanat, 2,4(6)-Toluendiisocyanat (TDI), Diphenylmethandiisocyanat (MDI), 1,4-Phenylendiisocyanat (PDI) oder Naphthalin-1,5-diisocyanat (NDI), sowie sogenannt polymeres Diphenylmethandiisocyanat (polymeres MDI oder pMDI), welches ein bei Raumtemperatur flüssiges Gemisch aus MDI und MDI-Homologen mit mehr als zwei Isocyanat-substituierten Benzolringen ist, wobei diese jeweils einen Anteil an Umsetzungsprodukten mit Polyolen enthalten können.

Polyisocyante, welche einen Anteil an Umsetzungsprodukten mit Polyolen enthalten, können auch als "Quasi-Prepolymere" bezeichnet werden. Dafür geeignet sind insbesondere Polyetherpolyole mit einem mittleren Molekulargewicht Mₙ von 300 bis 2'000 g/mol, insbesondere ausgewählt aus Poly(oxy-1,2-ethylen)diolen, Ethylenoxid-Einheiten enthaltenden Poly(oxy-1,2-ethylen)diolen, ethoxyliertem und/oder propoxyliertem 1,1,1-Trimethylolpropan und ethoxyliertem und/oder propoxyliertem Glycerin.

Besonders bevorzugt ist das Polyisocyanat ausgewählt aus bei Raumtemperatur flüssigen Oligomeren und Derivaten von HDI, IPDI, TDI und MDI, und polymerem MDI (pMDI), wobei diese jeweils Umsetzungsprodukte mit Polyolen enthalten können.

Bevorzugt sind insbesondere polymeres MDI sowie Oligomere enthaltend Uretdion- oder Isocyanurat- oder Iminooxadiazindion-Gruppen oder verschiedene dieser Gruppen, sowie Derivate enthaltend Ester- oder Harnstoff- oder Urethan- oder Biuret- oder Allophanat- oder Carbodiimid- oder Uretonimin- oder Oxadiazintrion-Gruppen oder verschiedene dieser Gruppen. Solche Polyisocyanate stellen in der Praxis üblicherweise Gemische von Substanzen mit unterschiedlichen Oligomerisierungsgraden und/oder chemischen Strukturen dar.

Besonders bevorzugt sind bei Raumtemperatur flüssige Gemische aus MDI und MDI-Homologen (polymeres MDI bzw. pMDI), HDI-Biurete wie Desmodur^{®} N 100 oder N 3200 (von Covestro), Tolonate^{®} HDB oder HDB-LV (von Vencorex) oder Duranate^{®} 24A-100 (von Asahi Kasei), HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane), HDI-Uretdione wie Desmodur^{®} N 3400 (von Covestro), HDI-Iminooxadiazindione wie Desmodur^{®} XP 2410 (von Covestro), HDI-Allophanate wie Basonat BA-Typen (BASF), TDI-Oligomere wie Desmodur^{®} IL (von Covestro), oder gemischte Isocyanurate auf Basis TDI/HDI wie Desmodur^{®} HL (von Covestro), wobei diese jeweils Umsetzungsprodukte mit Polyolen enthalten können.

Bezogen auf die gesamte Zusammensetzung beträgt das Verhältnis der Anzahl Isocyanatgruppen zur Summe der Anzahl Aldimingruppen plus Hydroxylgruppen mindestens 0.9.

Dabei werden alle in der Zusammensetzung enthaltenen Isocyanatgruppen zur Summe aus allen in der Zusammensetzung enthaltenen Aldimingruppen plus allen in der Zusammensetzung enthaltenen Hydroxylgruppen ins Verhältnis gesetzt. Hydroxylgruppen stammen dabei insbesondere von Polyolen **P,** sowie gegebenenfalls von weiteren Polyolen, insbesondere Kettenverlängerern.

Bevorzugt ist ein Verhältnis der Anzahl Isocyanatgruppen zur Summe der Anzahl Aldimingruppen plus Hydroxylgruppen von 0.9 bis 1.2, insbesondere 1 bis 1.1. Eine solche Zusammensetzung härtet zu einem Polymer von hoher Festigkeit und guter Dehnbarkeit.

Die härtbare Zusammensetzung enthält weiterhin mindestens eine Verbindung **V** mit aktivierten Methylengruppen der Formel (II), 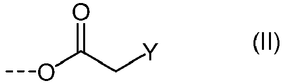 wobei Y für einen Rest der Formel ---CN , 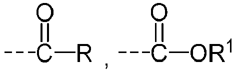 oder 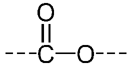 steht.

Bevorzugt steht R für einen Alkylrest mit 1 bis 6 C-Atomen oder für Phenyl, besonders bevorzugt für Methyl, Ethyl, Propyl, Isopropyl, Butyl oder Phenyl. Am meisten bevorzugt steht R für Methyl.

Bevorzugt steht R¹ für Methyl, Ethyl oder tert-Butyl, besonders bevorzugt für Ethyl oder tert-Butyl, insbesondere für Ethyl.

Bevorzugt ist die Verbindung **V** bei Raumtemperatur flüssig. Insbesondere weist sie eine Viskosität bei 20 °C von 0.01 bis 50 Pa s, mehr bevorzugt 0.01 bis 25 Pa s, besonders bevorzugt 0.01 bis 10 Pa s, insbesondere 0.02 bis 5 Pa s, auf, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹, für Viskositäten von weniger als 0.5 Pa s mit Kegeldurchmesser 50 mm. Eine solche Verbindung ermöglicht Zusammensetzungen, die bei Umgebungstemperatur ohne Zusatz von Lösemitteln oder Verdünnern gut verarbeitbar sind.

Bevorzugt enthält die Verbindung **V** eine bis sechs aktivierte Methylengruppen der Formel (II), besonders bevorzugt zwei bis vier, insbesondere zwei bis drei, aktivierte Methylengruppen der Formel (II).

Bevorzugt weist die Verbindung **V** ein Molekulargewicht, oder im Fall einer oligomeren oder polymeren Verbindung **V** mittleres Molekulargewicht Mₙ, von 100 bis 10'000 g/mol, bevorzugt 196 bis 5'000 g/mol, besonders bevorzugt 240 bis 2'500 g/mol, insbesondere 240 bis 1'500 g/mol, auf.

Bevorzugt weist die Verbindung **V** in Bezug auf die aktivierten Methylengruppen der Formel (II) ein Equivalentgewicht, oder im Fall einer oligomeren oder polymeren Verbindung **V** mittleres Equivalentgewicht, von 100 bis 2'100 g/eq, bevorzugt 114 bis 600 g/eq, insbesondere 114 bis 400 g/eq, auf.

Bevorzugt weist die Verbindung **V** in Bezug auf die aktivierten Methylengruppen der Formel (II) eine Funktionalität, oder im Fall einer oligomeren oder polymeren Verbindung **V** mittlere Funktionalität, von 1 bis 4, bevorzugt 1.5 bis 3.5, insbesondere 1.8 bis 3, auf.

Insbesondere weist die Verbindung **V** in Bezug auf die aktivierten Methylengruppen der Formel (II) ein Equivalentgewicht, oder im Fall einer oligomeren oder polymeren Verbindung **V** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **V** mittlere Funktionalität, von 1 bis 4, bevorzugt 1.5 bis 3.5, insbesondere 1.8 bis 3, auf.

Bevorzugt liegt bezogen auf die gesamte Zusammensetzung das Verhältnis der Anzahl aktivierte Methylengruppen der Formel (II) zur Anzahl Aldimingruppen der Formel (I) im Bereich von 1 bis 4, besonders bevorzugt 1.2 bis 3, insbesondere 1.5 bis 2.5.

Bevorzugt wird die Verbindung **V** erhalten aus der Umesterung von mindestens einer Hydroxylgruppen-haltigen Verbindung mit mindestens einer Verbindung der Formel (IV), 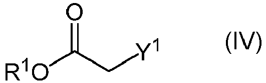 wobei Y¹ für einen Rest der Formel ---CN , 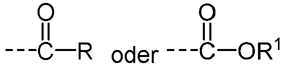 steht und R und R¹ die bereits beschriebenen Bedeutungen aufweisen.

Bevorzugt erfolgt die Umesterung bei einer Temperatur von 50 bis 150 °C unter destillativer Entfernung des freigesetzten Alkohols R¹OH und gegebenenfalls Fragmentierungsprodukten davon, gegebenenfalls unter Vakuum und gegebenenfalls in Anwesenheit von Katalysatoren.

Weiterhin möglich ist die Herstellung einer Verbindung **V** mit Cyanoacetatgruppen durch Veresterung von Cyanoessigsäure mit mindestens einer Hydroxylgruppen-haltigen Verbindung.

Weiterhin möglich ist die Herstellung einer Verbindung **V** mit Acetoacetatgruppen, indem die der Verbindung **V** zugrunde liegende Hydroxylgruppen-haltige Verbindung mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Weiterhin möglich ist die Herstellung einer Verbindung **V** mit Malonatgruppen durch Veresterung von Malonsäure mit mindestens einer Hydroxylgruppen-haltigen Verbindung.

Als Verbindung der Formel (IV) geeignet ist insbesondere Methylcyanoacetat, Ethylcyanoacetat, tert-Butylcyanoacetat, Methylacetoacetat, Ethylacetoacetat, tert-Butylacetoacetat, Ethyl-3-oxohexanoat, Ethylbenzoylacetat, Malonsäuredimethylester, Malonsäurediethylester, Malonsäurediisopropylester oder Malonsäuredi-(tert-butylester).

Bevorzugt ist Ethylcyanoacetat oder tert-Butylcyanoacetat, Ethylacetoacetat oder tert-Butylacetoacetat, sowie Malonsäurediethylester.

Als Hydroxylgruppen-haltige Verbindung bevorzugt sind handelsübliche OH-funktionelle Verbindungen oder Polymere, wie insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiole, 1,3-Cyclohexandimethanol, 1,4-Cyclohexandimethanol, 1,1,1-Trimethylolethan, 1,1,1-Trimethylolpropan, Glycerin, Pentaerythrit, ethoxyliertes oder insbesondere propoxyliertes Glycerin, ethoxyliertes oder insbesondere propoxyliertes 1,1,1-Trimethylolpropan, Poly(oxy-1,2-propylen)diole mit mittlerem Molekulargewicht von 400 bis 4'000 g/mol, EO-terminierte Poly(oxy-1,2-propylen)diole mit mittlerem Molekulargewicht von 1'000 bis 4'000 g/mol, Poly(oxy-1,2-propylen)triole mit mittlerem Molekulargewicht von 400 bis 6'000 g/mol, EO-terminierte Poly(oxy-1,2-propylen)triole mit mittlerem Molekulargewicht von 3'000 bis 6'000 g/mol, Di- oder Trimerfettsäure-basierte Polyesterpolyole mit mittlerem Molekulargewicht von 1'000 bis 3'000 g/mol, Rizinusöl, Derivate von Rizinusöl oder hydroxylierte Pflanzenöle.

In einer bevorzugten Ausführungsform der Erfindung steht Y für einen Rest der Formel ---CN und die aktivierten Methylengruppen der Formel (II) sind somit Cyanoacetatgruppen.

Bevorzugt ist eine Verbindung **V** mit Cyanoacetatgruppen ausgewählt aus der Liste bestehend Ethylcyanoacetat, aus dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

In einer besonders bevorzugten Ausführungsform der Erfindung steht Y in der Formel (II) für einen Rest der Formel 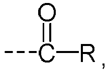 wobei R bevorzugt für Methyl steht und die aktivierten Methylengruppen der Formel (II) somit Acetoacetatgruppen sind.

Bevorzugt ist eine Verbindung **V** mit Acetoacetatgruppen ausgewählt aus der Liste bestehend aus Ethylacetoacetat, 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, dem Triacetoacetat von propoxyliertem und/oder ethoxyliertem Glycerin, Poly(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

Davon bevorzugt ist 1,2-Propandioldiacetoacetat, Dipropylenglykoldiacetoacetat, Neopentylglykoldiacetoacetat, Glycerin-diacetoacetat, Glycerin-triacetoacetat, 1,1,1-Trimethylolpropan-diacetoacetat, 1,1,1-Trimethylolpropan-triacetoacetat, ein Triacetoacetat von propoxyliertem 1,1,1-Trimethylolpropan mit mittlerem Molekulargewicht Mₙ von 500 bis 1'000 g/mol oder ein Poly(oxy-1,2-propylen)diol-bis-(acetoacetat) mit mittlerem Molekulargewicht Mₙ von 550 bis 5'000 g/mol.

In weiteren Ausführungsform steht Y für einen Rest der Formel 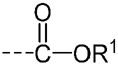 oder 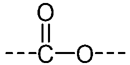 und die aktivierten Methylengruppen der Formel (II) sind somit Malonatgruppen.

Bevorzugt ist eine Verbindung **V** mit Malonatgruppen ausgewählt aus der Liste bestehend aus Malonsäurediethylester, Malonsäurediisopropylester, 1,2-Ethandiol-bis(ethylmalonat), 1,2-Propandiol-bis(ethylmalonat), 1,3-Propandiol-bis(ethylmalonat), 1,4-Butandiol-bis(ethylmalonat), 1,6-Hexandiol-bis(ethylmalonat), 1,4-Cyclohexandimethanol-bis(ethylmalonat), Diethylenglykol-bis(ethylmalonat), Dipropylenglykol-bis(ethylmalonat), Glycerin-tris(ethylmalonat), 1,1,1-Trimethylolpropan-tris(ethylmalonat), Rizinusöl-tris(ethylmalonat), Poly(oxy-1,2-propylen)diol-bis(ethylmalonat) mit mittlerem Molekulargewicht Mₙ von 500 bis 2'000 g/mol, propoxyliertem 1,1,1-Trimethylolpropan mit drei Ethylmalonat-Endgruppen und einem mittleren Molekulargewicht Mₙ von 650 bis 2'500 g/mol, entsprechende oligomere Verbindungen dieser Umsetzungsprodukte, sowie Malonatgruppen enthaltende Polyesterdiole aus der Umsetzung von Diolen wie 1,6-Hexandiol und 1,4-Cyclohexandimethanol mit Malonsäure und Malonsäurediethylester und gegebenenfalls Adipinsäure oder Adipinsäurediethylester.

Geeignete Verbindungen mit Malonatgruppen sind auch kommerziell erhältlich, insbesondere als Acure^{®} 510-200 (von Allnex).

Bevorzugt enthält die härtbare Zusammensetzung mindestens einen weiteren Bestandteil ausgewählt aus Vernetzern, Katalysatoren, Trocknungsmitteln, Füllstoffen und Pigmenten. Bevorzugt enthält die härtbare Zusammensetzung mehrere solche Bestandteile.

Bevorzugt als Vernetzer sind sogenannte Kettenverlängerer oder niedrigmolekulare Polyole, wie insbesondere 1,3-Propandiol, 1,4-Butandiol, 1,2-Butandiol, 2-Methyl-1,3-propandiol, 1,5-Pentandiol, Neopentylglykol, 2-Methyl-1,4-butandiol, 1,6-Hexandiol, 3-Methyl-1,5-pentandiol, 1,3-Cyclohexandimethanol, 1,4-Cyclohexandimethanol, sowie ethoxyliertes und/oder propoxyliertes Glycerin oder ethoxyliertes und/oder propoxyliertes 1,1,1-Trimethylolpropan jeweils mit einer OH-Zahl von 300 bis 650 mg KOH/g.

Bevorzugt werden solche Vernetzer in Kombination mit einem Polyol **P** eingesetzt.

Bevorzugt als Katalysator sind
- Metallverbindungen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, sowie Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, und/oder
- Amingruppen-haltige Verbindungen wie insbesondere Triethylamin, Tripropylamin, Tributylamin, Tri(2-ethylhexyl)amin, N,N-Dimethylisopropylamin, N-Ethyldiisopropylamin, N,N-Dimethylcyclohexylamin, N,N-Dimethyl-C₁₂₋₁₄-alkylamin, N,N-Dimethylbenzylamin, α-Methylbenzyldimethylamin, N-Methylpiperidin, N,N'-Dimethylpiperazin, N-Methyl-N'-dimethylaminoethylpiperazin, Bis-(dimethylaminoethyl)piperazin, 1,4-Diazabicyclo[2.2.2]octan (DABCO), 1,3,5-Trimethylhexahydrotriazin, 1,3-Bis(dimethylaminopropyl)harnstoff, Bis(2-dimethylaminoethyl)ether, Tris(2-(2-methoxyethoxy)ethyl)amin, N-Methylmorpholin, N-Ethylmorpholin oder 2,2'-Dimorpholinodiethylether (DMDEE).

Dabei katalysieren Metallverbindungen die Reaktion von Isocyanatgruppen und sind bevorzugt für härtbare Zusammensetzungen enthaltend Polyisocyanate mit aliphatischen Isocyanatgruppen. Amingruppen-haltige Verbindungen katalysieren sowohl die Reaktion von Isocyanatgruppen als auch die Reaktion der Verbindung **V** mit Aldiminen **L.**

Für den Fall, dass die härtbare Zusammensetzung Säuren enthält, ist bevorzugt zusätzlich mindestens eine Base, insbesondere eine Amingruppen-haltige Verbindung, in einer solchen Menge enthalten, dass die härtbare Zusammensetzung insgesamt nicht sauer ist.

Bevorzugt enthält die härtbare Zusammensetzung als Trocknungsmittel mindestens ein Zeolith, auch Molekularsieb genannt.

Bevorzugte Füllstoffe sind gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, Metall-Pulver beispielsweise von Aluminium, Kupfer, Eisen, Silber oder Stahl, PVC-Pulver oder Hohlkugeln. Besonders bevorzugt sind Calciumcarbonate, Baryte, Quarzmehle, Quarzsande oder Kaoline.

Bevorzugte Pigmente sind Titandioxid, Chromoxid, Eisenoxide oder organische Pigmente.

Die härtbare Zusammensetzung kann zusätzlich weitere Bestandteile enthalten, insbesondere:
- Isocyanatgruppen-haltige Polymere,
- weitere Vernetzer wie insbesondere Oxazolidine, Ketimine oder weitere Aldimine,
- Farbstoffe,
- Fasern, insbesondere Glasfasern, Kohlefasern, Metallfasern, Keramikfasern, Hanffasern, Zellulosefasern oder Kunststofffasern wie Polyamidfasern oder Polyethylenfasern,
- Nanofüllstoffe oder Nanofasern wie Graphen oder Carbon Nanotubes,
- Weichmacher, insbesondere Phthalate insbesondere Diisononylphthalat (DINP), Diisodecylphthalat (DIDP) oder Di(2-propylheptyl)phthalat (DPHP), hydrierte Phthalate insbesondere Diisononyl-1,2-cyclohexandicarboxylat (DINCH), Terephthalate insbesondere Bis(2-ethylhexyl)terephthalat oder Diisononylterephthalat (DINT), hydrierte Terephthalate insbesondere Bis(2-ethylhexyl)-1,4-cyclohexandicarboxylat oder Diisononyl-1,4-cyclohexandicarboxylat, Isophthalate, Trimellitate, Adipate insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole mit blockierten Hydroxylgruppen, insbesondere in der Form von Acetylgruppen, organische Sulfonate oder Phosphate insbesondere Diphenylkresylphosphat (DPK), Polybutene, Polyisobutene oder von natürlichen Fetten oder Ölen abgeleitete Weichmacher insbesondere epoxidiertes Soja- oder Leinöl oder Rapsölmethylester, wobei Phthalate, hydrierte Phthalate, Adipate oder Weichmacher mit Polyetherstruktur bevorzugt sind,
- Lösemittel,
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene,
- weitere Trocknungsmittel wie insbesondere Calciumoxid, hochreaktive Isocyanate wie p-Tosylisocyanat, Mono-Oxazolidine wie Incozol^{®} 2 (von Incorez) oder Orthoester,
- Haftvermittler, insbesondere Titanate oder Organoalkoxysilane wie insbesondere Epoxysilane, insbesondere 3-Glycidoxypropyltrimethoxysilan oder 3-Glycidoxypropyltriethoxysilan, Aminosilane, Iminosilane, Mercaptosilane, Vinylsilane, (Meth)acrylosilane, Carbamatosilane, Alkylsilane, S-(Alkylcarbonyl)mercaptosilane oder oligomere Formen dieser Silane,
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- nicht-reaktive thermoplastische Polymere, insbesondere Homo- oder Copolymere von ungesättigten Monomeren, insbesondere aus der Gruppe umfassend Ethylen, Propylen, Butylen, Isobutylen, Isopren, Styrol, Vinylacetat und Alkyl-(meth)acrylate, insbesondere Polyethylene (PE), Polypropylene (PP), Polyisobutylene, Ethylenvinylacetat-Copolymere (EVA) und ataktische Poly-α-Olefine (APAO);
- Modifizierungsmittel wie Kohlenwasserstoffharze, natürliche oder synthetische Wachse oder Bitumen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Es kann sinnvoll sein, gewisse Substanzen vor dem Einmischen in die Zusammensetzung chemisch oder physikalisch zu trocknen.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C. Eine solche Zusammensetzung verursacht besonders wenig Emissionen.

Bevorzugt ist die härtbare Zusammensetzung als Mehrkomponentensystem, insbesondere als Zwei- oder Dreikomponentensystem, formuliert.

Bevorzugt umfasst die härtbare Zusammensetzung eine Komponente **K1** und eine Komponente **K2,** sowie optional eine Komponente **K3,** welche jeweils für sich allein lagerstabil sind und in voneinander getrennten Gebinden gelagert werden.

Bevorzugt sind die Inhaltsstoffe dabei so auf die Komponenten verteilt, dass entweder
- Aldimine **L** und gegebenenfalls Polyole Bestandteil der Komponente **K1** sind, Polyisocyanate Bestandteil der Komponente **K2** sind und Verbindungen **V** entweder Bestandteil der Komponente **K2** sind oder als eigene Komponente **K3** vorliegen, oder dass
- Verbindungen **V** und gegebenenfalls Polyole Bestandteil der Komponente **K1** sind und Aldimine **L** und Polyisocyanate Bestandteil der Komponente **K2** sind.

Weitere Inhaltsstoffe der Zusammensetzung können als Bestandteil der Komponente **K1** und/oder **K2** und/oder **K3** vorhanden sein. Dabei soll darauf geachtet werden, dass die Komponenten so formuliert sind, dass jede Komponente für sich in einem geeigneten Gebinde lagerstabil ist.

In einer bevorzugten Ausführungsform der Erfindung umfasst die härtbare Zusammensetzung eine Komponente **K1,** eine Komponente **K2** und gegebenenfalls eine Komponente **K3,** wobei die Komponente **K1** mindestens ein Aldimin der Formel (III a) enthält, die Komponente **K2** mindestens ein Polyisocyanat enthält und die Verbindung V entweder Bestandteil der Komponente **K2** ist oder als separate Komponente **K3** vorliegt. Als Polyisocyanate bevorzugt sind dabei solche mit aliphatischen Isocyanatgruppen, insbesondere Trimere von HDI. Eine solche härtbare Zusammensetzung härtet zu einem Polyharnstoff und ermöglicht besonders hochwertige Beschichtungen mit besonders hoher Festigkeit und Beständigkeit gegenüber UV, Hitze, Feuchtigkeit und Abrasion.

In einer weiteren bevorzugten Ausführungsform der Erfindung umfasst die härtbare Zusammensetzung eine Komponente **K1** und eine Komponente **K2,** wobei die Komponente **K1** mindestens ein Aldimin der Formel (III a) und mindestens ein Polyisocyanat enthält und und die Komponente **K2** mindestens eine Verbindung **V** enthält.

In einer weiteren bevorzugten Ausführungsform der Erfindung umfasst die härtbare Zusammensetzung eine Komponente **K1,** eine Komponente **K2** und gegebenenfalls eine Komponente **K3,** wobei die Komponente **K1** mindestens ein Polyol **P** und mindestens ein Aldimin der Formel (III b) enthält, die Komponente **K2** mindestens ein Polyisocyanat enthält und die Verbindung **V** entweder Bestandteil der Komponente **K2** ist oder als separate Komponente **K3** vorliegt. Eine solche Zusammensetzung ist besonders kostengünstig und ermöglicht hohe Festigkeiten und gute Dehnbarkeit.

In einer weiteren bevorzugten Ausführungsform der Erfindung umfasst die härtbare Zusammensetzung eine Komponente **K1** und eine Komponente **K2,** wobei die Komponente **K1** mindestens ein Polyol **P** und mindestens eine Verbindung **V** enthält und die Komponente **K2** mindestens ein Polyisocyanat und mindestens ein Aldimin der Formel (III b) enthält.

Die Konsistenz der Komponenten ist vorzugsweise so, dass die Komponenten bei Umgebungsbedingungen mit einfachen Verfahren gut miteinander vermischt werden können. Dazu sind insbesondere flüssige oder pastöse Komponenten geeignet. Bevorzugt weisen die Komponenten eine ähnliche Viskosität und/oder Rheologie auf. Solche Komponente sind besonders einfach miteinander mischbar.

Die Komponenten **K1, K2** und gegebenenfalls **K3** der härtbaren Zusammensetzung werden getrennt voneinander hergestellt. Dabei werden die Inhaltsstoffe der jeweiligen Komponente miteinander vermischt, so dass eine makroskopisch homogene Flüssigkeit oder Paste entsteht. Die Komponenten **K1, K2** und gegebenenfalls **K3** werden jeweils in einem separaten Gebinde gelagert. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden alle Inhaltsstoffe, insbesondere als Komponenten **K1, K2** und gegebenenfalls **K3,** kurz vor oder während der Applikation miteinander vermischt. Im Fall von drei Komponenten ist die Reihenfolge des Mischens beliebig. Es können alle drei Komponenten gleichzeitig vermischt werden, oder es können zwei der drei Komponenten zuerst vermischt und anschliessend die weitere Komponente eingemischt werden. Bevorzugt werden Aldimine **L** und Verbindungen **V** nicht separat vorgemischt, sondern in Anwesenheit des Polyisocyanats vermischt. Das Mischungsverhältnis wird so gewählt, dass das Verhältnis der Anzahl Aldimingruppen zur Anzahl Isocyanatgruppen und das Verhältnis der Anzahl aktivierte Methylengruppen der Formel (II) zur Anzahl Aldimingruppen im erfindungsgemässen Bereich liegen.

Das Mischen erfolgt bevorzugt bei Umgebungstemperatur, insbesondere bei einer Temperatur von -5 bis 50 °C, bevorzugt 0 bis 40 °C, insbesondere 5 bis 35 °C.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftungsaufbau zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet. Die Offenzeit kann auch als "Verarbeitungszeit" bezeichnet werden. Die Zeit bis zur Ausbildung einer klebfreien Oberfläche ("tack-free time") stellt dabei ein Mass für die Offenzeit dar.

Mit dem Vermischen der Inhaltsstoffe oder Komponenten beginnt die Zusammensetzung durch die einsetzende chemische Reaktion auszuhärten.

Aufgrund der beobachteten Effekte kann vermutet werden, dass die aktivierten Methylengruppen der Formel (II) mit Aldimingruppen der Formel (I) reagieren und diese dadurch aktiviert, d.h. gegenüber Isocyanatgruppen reaktionsfähig, werden. Die Reaktion der aktivierten Aldimingruppen mit den Isocyanatgruppen führt zur Vernetzung des Isocyanatgruppen-haltigen Polymers unter Bildung von Harnstoffgruppen. Anders als bei der hydrolytischen Aktivierung von Aldimingruppen wird der Aldehyd dabei nicht freigesetzt, sondern verbleibt in derivatisierter Form, vermutlich als Addukt mit der Verbindung **V** oder Folgeprodukten davon, dauerhaft in der Zusammensetzung. Weiterhin können Isocyanatgruppen mit vorhandener Feuchtigkeit oder, insbesondere im Fall von aromatischen Isocyanatgruppen, mit Methylengruppen der Formel (II) reagieren.

Die Aushärtung erfolgt bevorzugt bei Umgebungstemperatur, insbesondere bei einer Temperatur von -5 bis 50 °C, bevorzugt 0 bis 40 °C.

Die Aushärtungsreaktion verläuft zuverlässig ohne Blasenbildung und ohne Geruchsbildung. Die in der Zusammensetzung verbleibenden Aldehyd-Derivate zeigen weder Anzeichen von Migration, noch scheinen sie weichmachend auf die ausgehärtete Zusammensetzung zu wirken.

Ein weiterer Gegenstand der Erfindung ist die ausgehärtete Zusammensetzung, erhalten aus der härtbaren Zusammensetzung nach dem Vermischen der Inhaltsstoffe oder Komponenten und anschliessendem Aushärten.

Bevorzugt verfügt die ausgehärtete Zusammensetzung über eine hohe Festigkeit, eine gute Dehnbarkeit und einen hohen Weiterreisswiderstand.

Bevorzugt weist die ausgehärtete Zusammensetzung eine Zugfestigkeit von mindestens 5 MPa, insbesondere mindestens 7 MPa, und - für speziell harte Zusammensetzungen mit einer Shore Härte von mehr als 60 D - insbesondere mindestens 15 MPa auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Bevorzugt weist die ausgehärtete Zusammensetzung eine Bruchdehnung von mindestens 50 %, insbesondere mindestens 100 %, auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Bevorzugt weist die ausgehärtete Zusammensetzung einen Weiterreisswiderstand von mindestens 7 N/mm, bevorzugt mindestens 10 N/mm, und für speziell harte Zusammensetzungen mit einer Shore Härte von mehr als 60 D von mindestens 25 N/mm, insbesondere mindestens 50 N/mm, auf, bestimmt gemäss DIN ISO 34-1 Verfahren B (winkelförmiger Prüfkörper) bei einer Probendicke von 2 mm und einer Zuggeschwindigkeit von 500 mm/min.

Die härtbare Zusammensetzung eignet sich für eine Vielzahl von Verwendungen. Sie wird insbesondere verwendet als Beschichtung, Klebstoff, Dichtstoff, Giessharz oder Spachtelmasse, insbesondere als elastische bis zähelastische Beschichtung oder Klebstoff.

Ein weiterer Gegenstand der Erfindung ist die Verwendung der härtbaren Zusammensetzung als elastische oder zähelastische Beschichtung oder Klebstoff, wobei die Inhaltsstoffe oder Komponenten miteinander vermischt werden und die vermischte Zusammensetzung im flüssigen Zustand auf mindestens ein Substrat appliziert wird.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Verwendung der härtbaren Zusammensetzung wird ein Artikel erhalten. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde auf einem thermostatisierten Kegel-Platte-Viskosimeter Rheotec RC30 (Kegeldurchmesser 10 mm, Kegelwinkel 1°, Kegelspitze-Platte-Abstand 0.05 mm, Scherrate 10 s⁻¹) gemessen. Viskositäten von weniger als 0.5 Pa s wurden mit einem Kegeldurchmesser von 50 mm und einer Scherrate von 100 s⁻¹ gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen.

### Herstellung von Aldiminen:

### Aldimin A-1:

212.2 g (2 mol) Benzaldehyd wurde unter Stickstoffatmosphäre vorgelegt, unter gutem Rühren mit 158.3 g (1 mol) 2,2(4),4-Trimethyl-1,6-hexandiamin (Vestamin^{®} TMD, von Evonik) versetzt und anschliessend die flüchtigen Bestandteile bei 80 °C und 10 mbar Vakuum entfernt. Erhalten wurden 333.6 g N,N'-Dibenzyliden-2,2(4),4-Trimethyl-1,6-hexandiamin als klare, gelbliche Flüssigkeit mit einer Aminzahl von 335 mg KOH/g und einem Aldimin-Equivalentgewicht von 167.3 g/eq.

### Aldimin A-2:

106.1 g (1 mol) Benzaldehyd wurde unter Stickstoffatmosphäre vorgelegt, unter gutem Rühren mit 124.0 g (1 mol NH₂) Polyoxypropyendiamin (Jeffamine^{®} D-230, von Huntsman) versetzt und anschliessend die flüchtigen Bestandteile bei 80 °C und 10 mbar Vakuum entfernt. Erhalten wurden 210.7 g einer klaren, gelblichen Flüssigkeit mit einer Viskosität bei 20 °C von 0.34 Pa·s, einer Aminzahl von 265 mg KOH/g und einem Aldimin-Equivalentgewicht von 212 g/eq.

### Aldimin A-3:

50.00 g **Aldehyd-1** (0.17 mol Aldehydgruppen) wurden unter Stickstoffatmosphäre vorgelegt, unter gutem Rühren mit 13.93 g (0.08 mol) Isophorondiamin (Vestamin^{®} IPD, von Evonik) versetzt und anschliessend die flüchtigen Bestandteile bei 80 °C und 10 mbar Vakuum entfernt. Erhalten wurde eine klare, gelbliche Flüssigkeit mit einer Aminzahl von 144 mg KOH/g und einem Aldimin-Equivalentgewicht von 390 g/eq.

Als **Aldehyd-1** wurde ein Reaktionsgemisch enthaltend mehrheitlich verzweigte 4-(C₁₀₋₁₄-Alkyl)benzaldehyde mit einem mittleren Aldehyd-Equivalentgewicht von 290 g/eq eingesetzt, erhalten aus mittels HF-BF₃ katalysierter Formylierung von C₁₀₋₁₄-Alkylbenzol.

### Aldimin A-4:

212.2 g (2 mol) Benzaldehyd wurde unter Stickstoffatmosphäre vorgelegt, unter gutem Rühren mit einer Mischung aus 51.1 g (0.5 mol) 1,5-Pentandiamin (von

Cathay Biotech) und 58.1 g (0.5 mol) 1,6-Hexandiamin versetzt und anschliessend die flüchtigen Bestandteile bei 80 °C und 10 mbar Vakuum entfernt. Erhalten wurden 289.8 g einer klaren, gelblichen Flüssigkeit mit einer Viskosität bei 20 °C von 0.09 Pa·s, einer Aminzahl von 393 mg KOH/g und einem Aldimin-Equivalentgewicht von 142.7 g/eq.

### Herstellung von Verbindungen mit aktivierten Methylengruppen-.

### Verbindung B-1:

134.2 g (1 mol) 1,1,1-Trimethylolpropan wurde mit 522.1 g (3.3 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 367.3 g 1,1,1-Trimethylolpropan-triacetoacetat als klare, gelbliche Flüssigkeit mit einer Viskosität bei 20 °C von 0.27 Pa·s und einem theoretischen Acetoacetat-Equivalentgewicht von 129 g/eq.

### Verbindung B-2:

146.1 g (1 mol) Isosorbid wurde mit 348.0 g (2.2 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 310.6 g Isosorbid-diacetoacetat als klare, gelbliche Flüssigkeit mit einer Viskosität bei 20 °C von 0.91 Pa·s und einem theoretischen Acetoacetat-Equivalentgewicht von 157 g/eq.

### Verbindung B-3:

92.1 g (1 mol) Glycerin (= 1,2,3-Trihydroxypropan) wurde mit 506.2 g (3.2 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 327.6 Glycerin-triacetoacetat als klare, gelbliche Flüssigkeit mit einer Viskosität bei 20 °C von 0.12 Pa·s und einem theoretischen Acetoacetat-Equivalentgewicht von 114.7 g/eq.

### Verbindung B-4:

104.1 g (1 mol) Neopentylglykol (= 2,2-Dimethyl-1,3-propandiol) wurde mit 348.0 g (2.2 mol) Ethylacetoacetat und 0.45 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 254.1 g Neopentylglykol-diacetoacetat als klare, gelbliche Flüssigkeit mit einer Viskosität bei 20 °C von < 0.05 Pa·s und einem theoretischen Acetoacetat-Equivalentgewicht von 136 g/eq.

### verwendete weitere Substanzen und Abkürzungen:

| | |
|---|---|
| **Polyol-1:** | Rizinusöl-basiertes verzweigtes Polyol (Setathane^{®} D 1150, OH-Zahl 156 mg KOH/g, von Allnex) |
| **Polyol-2:** | Trimethylolpropan-gestartetes Polyoxypropylentriol (Desmophen^{®} 4011 T, OH-Zahl 550 mg KOH/g, von Covestro) |
| **Polyol-3:** | Ethylenoxid-terminiertes Polyoxypropylentriol (Voranol^{®} CP 4755, OH-Zahl 35 mg KOH/g, von Dow) |
| **Polyol-4:** | Ethylenoxid-terminiertes Polyoxypropylentriol mit 45 Gew.% gepfropftem SAN-Polymer (Lupranol^{®} 4003/1, OH-Zahl 20 mg KOH/g, von BASF) |
| **HDI-Trimer:** | Trimer von 1,6-Hexandiisocyanat (Desmodur^{®} N 3600, 23 Gew.% NCO, von Covestro) |
| **modifiziertes MDI:** | Carbodiimid-modifiziertes Diphenylmethandiisocyanat (Desmodur^{®} VH 20 N, 24.5 Gew.% NCO, von Covestro) |
| **polymeres MDI:** | Diphenylmethandiisocyanat mit polymeren Anteilen (Desmodur^{®} VL, 31.5 Gew.% NCO, von Covestro) |

### Herstellung von härtbaren Zusammensetzungen,

### Beispiele Z-1 bis Z-30:

Für jedes Beispiel wurden die in den Tabellen 1 bis 4 angegebenen Inhaltsstoffe der ersten Komponente **(K1)** in den angegebenen Mengen (in Gewichtsteilen) vermischt und in einem verschlossenen Gebinde aufbewahrt.

Ebenso wurden die Inhaltsstoffe der zweiten Komponente **(K2)** in den in den Tabellen 1 bis 4 angegebenen Mengen (in Gewichtsteilen) vermischt und in einem verschlossenen Gebinde aufbewahrt.

Falls vorhanden wurde der Inhaltsstoff der dritten Komponente **(K3)** in der in den Tabellen 1 bis 4 angegebenen Menge eingesetzt.

Anschliessend wurden die Komponenten jeder Zusammensetzung mittels des Zentrifugalmischers zu einer homogenen Flüssigkeit verarbeitet und wie folgt beschrieben geprüft.

Die **Gelierzeit** (Zeitspanne zwischen dem Vermischen der Komponenten und der Gelierung) wurde bestimmt, indem 10 g der vermischten Zusammensetzung mittels eines Spatels in regelmässigen Zeitabständen bewegt wurden, bis die Masse gelierte.

Zur Bestimmung der mechanischen Eigenschaften wurde die Zusammensetzung auf eine PTFE-beschichteten Folie zu einem Film von 2 mm Dicke ausgegossen, dieser durch Lagerung während 14 Tagen im Normklima ausgehärtet, einige hantelförmige Prüfkörper (Länge 75 mm, Steglänge 30 mm, Stegbreite 4 mm) aus dem Film gestanzt und diese gemäss DIN EN 53504 bei einer Zuggeschwindigkeit von 200 mm/min auf maximale **Zugfestigkeit, Bruchdehnung** und **E-Modul 5 %** (zwischen 0.5-5 % Dehnung) geprüft. Weiter wurden einige Prüfkörper zur Bestimmung des **Weiterreisswiderstandes** ausgestanzt und gemäss DIN ISO 34-1, Verfahren B (winkelförmiger Prüfkörper) bei einer Zuggeschwindigkeit von 500 mm/min geprüft.

Die **Shore** Härte wurde bestimmt nach DIN 53505 an zylindrischen Prüfkörpern (Durchmesser 20 mm, Dicke 5 mm) nach einer Lagerzeit von 14 Tagen im Normklima.

Der **Geruch** wurde durch Riechen mit der Nase im Abstand von 2 cm an den frisch hergestellten Filmen beurteilt. "0" bedeutet, dass kein Aldehyd-Geruch wahrnehmbar war. "+", "++" oder"+++" bedeuten, dass ein leichter, deutlicher oder intensiver Aldehyd-Geruch wahrnehmbar war.

Zur Bestimmung der Tendenz zu **Blasenbildung** wurde die frisch vermischte Zusammensetzung in einer Schichtdicke von 500 µm auf eine Glasplatte appliziert und diese sofort danach während 24 Stunden in einer Klimakammer bei 30 °C und 80 % relativer Luftfeuchtigkeit gelagert und anschliessend beurteilt. "0" bedeutet, dass keine Blasen vorhanden waren. "+", "++" oder"+++" bedeuten, dass wenige, einige oder viele Blasen vorhanden waren.

Bei der Aushärtung entstand jeweils ein nicht-klebriges, polymeres Material.

Die Resultate sind in den Tabellen 1 bis 4 angegeben.

Die mit **"(Ref.)"** bezeichneten Beispiele sind Vergleichsbeispiele.

**Tabelle 1: Zusammensetzung und Eigenschaften von Z-1 bis Z-6.**

| **Beispiel** | **Z-1 (Ref.)** | **Z-2 (Ref.)** | **Z-3** | **Z-4** | **Z-5** | **Z-6** |
|---|---|---|---|---|---|---|
| **Komponente K1:** | | | | | | |
| **Polyol-1** | 90.1 | 87.9 | 77.2 | 74.9 | 76.1 | 73.3 |
| **Polyol-2** | 4.0 | 1.2 | 4.3 | 5.0 | 4.0 | 4.75 |
| Aldimin **A-1** | - | 5.0 | 5.0 | 5.0 | - | - |
| Aldimin **A-4** | - | - | - | - | 5.0 | 5.0 |
| Zeolith-Paste ¹ | 5.0 | 5.0 | 5.0 | 5.0 | 5.0 | 5.0 |
| DBTDL 10% ² | 0.3 | 0.3 | 0.3 | 0.3 | 0.3 | 0.3 |
| DABCO ³ | 0.6 | 0.6 | 0.6 | 0.6 | 0.6 | 0.6 |
| **Komponente K2:** | | | | | | |
| HDI-Trimer | 56.0 | 56.0 | 56.0 | 56.0 | 56.0 | 56.0 |
| Verbindung **B-1** | - | - | 7.6 | - | 9.1 | - |
| Verbindung **B-2** | - | - | - | 9.2 | - | 11.0 |
| Verhältnis (II)/(I) ⁴ | - | - | 2.0 | 2.0 | 2.0 | 2.0 |
| Gelierzeit [min] | 40 | 42 | 125 | 68 | 30 | 20 |
| Zugfestigkeit [MPa] | 4.5 | 7.2 | 10.3 | 11.9 | 12.4 | 12.4 |
| Bruchdehnung [%] | 86 | 103 | 120 | 109 | 117 | 107 |
| E-Modul 5% [MPa] | 6.7 | 9.5 | 13.0 | 24.0 | 17.9 | 48.8 |
| Weiterreisswiderstand [N/mm] | 6.9 | 10.5 | 14.6 | 24.0 | 13.7 | 23.5 |
| Shore A | 70 | 73 | 78 | 88 | 82 | 91 |
| Geruch | 0 | ++ | 0 | 0 | 0 | 0 |
| Blasenbildung | 0 | 0 | 0 | 0 | 0 | 0 |

| | | | | | | |
|---|---|---|---|---|---|---|
| ¹ Molekularsieb 3Å 50 Gew.% in Rizinusöl ² Dibutylzinndilaurat 10 Gew.% in Dioctyladipat ³ DABCO^{®} 33-LV (von Evonik) ⁴ Verhältnis der Anzahl aktivierte Methylengruppen der Formel (II) zur Anzahl Aldimingruppen der Formel (I) | | | | | | |

**Tabelle 2: Zusammensetzung und Eigenschaften von Z-7 bis Z-15.**

| **Beispiel** | **Z-7 (Ref.)** | **Z-8** | **Z-9** | **Z-10** | **Z-11** | **Z-12** | **Z-13** | **Z-14** | **Z-15 (Ref.)** |
|---|---|---|---|---|---|---|---|---|---|
| **Komponente K1:** | | | | | | | | | |
| **Polyol-1** | 87.04 | 78.5 | 76.6 | 79.5 | 78.1 | 80.8 | 79.8 | 81.4 | 85.5 |
| **Polyol-2** | 2.06 | 4.5 | 5.1 | 4.2 | 4.58 | 5.0 | 5.3 | 4.75 | 3.6 |
| Aldimin **A-2** | 5.0 | 5.0 | 5.0 | 5.0 | 5.0 | - | - | - | - |
| Aldimin **A-3** | - | - | - | - | - | 5.0 | 5.0 | 5.0 | 5.0 |
| Zeolith-Paste ¹ | 5.0 | 5.0 | 5.0 | 5.0 | 5.0 | 5.0 | 5.0 | 5.0 | 5.0 |
| DBTDL 10% ² | 0.3 | 0.3 | 0.3 | 0.3 | 0.3 | 0.3 | 0.3 | 0.3 | 0.3 |
| DABCO ³ | 0.6 | 0.6 | 0.6 | 0.6 | 0.6 | 0.6 | 0.6 | 0.6 | 0.6 |
| SA 5% ⁴ | - | - | - | - | - | - | - | - | 0.5 |
| **Komponente K2:** | | | | | | | | | |
| HDI-Trimer | 56.0 | 56.0 | 56.0 | 56.0 | 56.0 | 56.0 | 56.0 | 56.0 | 56.0 |
| Verbindung | - | **B-1** | **B-2** | **B-3** | **B-4** | **B-1** | **B-2** | **B-3** | - |
| | | 6.1 | 7.4 | 5.4 | 6.4 | 3.3 | 4.0 | 2.95 | |
| Verhältnis (II)/(I) ⁵ | - | 2.0 | 2.0 | 2.0 | 2.0 | 2.0 | 2.0 | 2.0 | 2.0 |
| Gelierzeit [min] | 40 | 29 | 93 | 37 | 38 | 110 | 115 | 115 | 115 |
| Zugfestigkeit [MPa] | 4.4 | 6.5 | 10.9 | 5.1 | 5.4 | 6.8 | 8.7 | 7.3 | 4.6 |
| Bruchdehnung [%] | 90 | 110 | 117 | 102 | 97 | 108 | 114 | 100 | 83 |
| E-Modul 5% [MPa] | 6.0 | 7.9 | 15.6 | 7.1 | 5.9 | 8.4 | 10.2 | 10.9 | 7.6 |
| Weiterreisswiderstand [N/mm] | 6.1 | 10.2 | 16.4 | 8.8 | 7.3 | 10.7 | 13.5 | n.b. | n.b. |
| Shore A | 40 | 75 | 82 | 69 | 66 | 74 | 76 | 77 | 72 |
| Geruch | ++ | 0 | 0 | 0 | 0 | 0 | 0 | 0 | 0 |
| Blasenbildung | 0 | 0 | 0 | 0 | 0 | 0 | 0 | 0 | 0 |

| | | | | | | | | | |
|---|---|---|---|---|---|---|---|---|---|
| ¹ Molekularsieb 3Å 50 Gew.% in Rizinusöl ² Dibutylzinndilaurat 10 Gew.% in Dioctyladipat ³ DABCO^{®} 33-LV (von Evonik) ⁴ Salicylsäure 5 Gew.% in Dioctyladipat ⁵ Verhältnis der Anzahl aktivierte Methylengruppen der Formel (II) zur Anzahl Aldimingruppen der Formel (I) "n.b." steht für "nicht bestimmt" | | | | | | | | | |

**Tabelle 3: Zusammensetzung und Eigenschaften von Z-16 bis Z-21.**

| **Beispiel** | **Z-16 (Ref.)** | **Z-17 (Ref.)** | **Z-18** | **Z-19** | **Z-20** | **Z-21** |
|---|---|---|---|---|---|---|
| **Komponente K1:** | | | | | | |
| **Polyol-3** | 59.9 | 55.85 | 49.6 | 48.3 | 38.6 | 32.8 |
| **Polyol-4** | 30.0 | 30.0 | 30.0 | 30.0 | 30 | 30 |
| 1,4-Butandiol | 5.1 | 4.15 | 4.3 | 4.3 | 3.6 | 2.6 |
| Aldimin **A-2** | - | 5.0 | 5.0 | 5.0 | 10.0 | - |
| Aldimin **A-4** | - | - | - | - | - | 10.0 |
| Zeolith-Paste ¹ | 5.0 | 5.0 | 5.0 | 5.0 | 5.0 | 5.0 |
| **Komponente K2:** | | | | | | |
| modifiziertes MDI | 30.0 | 30.0 | 30.0 | 30.0 | 30.0 | 30.0 |
| **Komponente K3:** | | | | | | |
| Verbindung | - | - | **B-1** | **B-2** | **B-4** | **B-4** |
| | | | 6.1 | 7.4 | 12.8 | 19.6 |
| Verhältnis (II)/(I) ² | - | - | 2.0 | 2.0 | 2.0 | 2.0 |
| Gelierzeit [min] | 41 | 34 | 20 | n.b. | 20 | 5 |
| Zugfestigkeit [MPa] | 4.9 | 8.8 | 9.7 | 12.9 | 12.7 | 15.6 |
| Bruchdehnung [%] | 173 | 227 | 263 | 221 | 244 | 124 |
| E-Modul 5% [MPa] | 3.8 | 5.1 | 4.0 | 8.7 | 4.7 | 63.6 |
| Weiterreisswiderstand [N/mm] | 6.8 | 7.3 | 9.2 | 10.9 | 15.1 | 27.6 |
| Shore | 58 A | 63 A | 60 A | 71 A | 59 A | 90 A |
| | | | | | | 66 D |
| Geruch | 0 | ++ | 0 | 0 | 0 | 0 |
| Blasenbildung | 0 | 0 | 0 | 0 | 0 | 0 |

| | | | | | | |
|---|---|---|---|---|---|---|
| ¹ Molekularsieb 3Å 50 Gew.% in **Polyol-3** ² Verhältnis der Anzahl aktivierte Methylengruppen der Formel (II) zur Anzahl Aldimingruppen der Formel (I) "n.b." steht für "nicht bestimmt" | | | | | | |

**Tabelle 4: Zusammensetzung und Eigenschaften von Z-22 bis Z-30.**

| **Beispiel** | **Z-22 (Ref.)** | **Z-23 (Ref.)** | **Z-24** | **Z-25** | **Z-26 (Ref.)** | **Z-27** | **Z-28** | **Z-29** | **Z-30** |
|---|---|---|---|---|---|---|---|---|---|
| **Komponente K1:** | | | | | | | | | |
| **Polyol-1** | 91.0 | 88.1 | 80.2 | 75.3 | 87.5 | 78.8 | 77.0 | 81.2 | 80.2 |
| **Polyol-2** | 4.0 | 1.9 | 4.1 | 5.5 | 2.5 | 5.1 | 5.6 | 5.5 | 5.8 |
| Aldimin **A-1** | - | 5.0 | 5.0 | 5.0 | - | - | - | - | - |
| Aldimin **A-2** | - | - | - | - | 5.0 | 5.0 | 5.0 | - | - |
| Aldimin **A-3** | - | - | - | - | - | - | - | 5.0 | 5.0 |
| Zeolith-Paste ¹ | 5.0 | 5.0 | 5.0 | 5.0 | 5.0 | 5.0 | 5.0 | 5.0 | 5.0 |
| **Komponente K2:** | | | | | | | | | |
| polymeres MDI | 41.0 | 41.0 | 41.0 | 41.0 | 41.0 | 41.0 | 41.0 | 41.0 | 41.0 |
| **Komponente K3:** | | | | | | | | | |
| Verbindung **B-1** | - | - | 5.7 | - | - | 6.1 | - | 3.3 | - |
| Verbindung **B-2** | - | - | - | 9.2 | - | - | 7.4 | - | 4.0 |
| Verhältnis (II)/(I) ² | - | - | 2.0 | 2.0 | - | 2.0 | 2.0 | 2.0 | 2.0 |
| Gelierzeit [min] | 45 | 45 | 40 | 98 | 32 | 20 | n.b. | 50 | 36 |
| Zugfestigkeit [MPa] | 21.9 | 23.6 | 23.7 | 23.5 | 19.7 | 20.8 | 24.0 | 19.9 | 20.6 |
| Bruchdehnung [%] | 70 | 61 | 77 | 81 | 79 | 90 | 93 | 95 | 94 |
| E-Modul 5% [MPa] | 431 | 466 | 439 | 396 | 288 | 343 | 384 | 198 | 228 |
| Weiterreisswiderstand [N/mm] | 98 | 92 | 107 | 106 | 82 | 86 | 103 | 77 | 90 |
| Shore D | 70 | 74 | 73 | 70 | 68 | 70 | 68 | 70 | n.b. |
| Geruch | 0 | +++ | 0 | 0 | ++ | 0 | 0 | 0 | 0 |
| Blasenbildung | ++ | ++ | 0 | 0 | + | 0 | 0 | 0 | 0 |

| | | | | | | | | | |
|---|---|---|---|---|---|---|---|---|---|
| ¹ Molekularsieb 3Å 50 Gew.% in Rizinusöl ² Verhältnis der Anzahl aktivierte Methylengruppen der Formel (II) zur Anzahl Aldimingruppen der Formel (I) "n.b." steht für "nicht bestimmt" | | | | | | | | | |

## Patentansprüche

1. Härtbare Zusammensetzung umfassend
- mindestens ein Aldimin **L** mit Aldimingruppen der Formel (I), 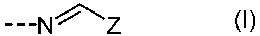 wobei Z für einen organischen Rest mit 1 bis 25 C-Atomen steht,
- gegebenenfalls mindestens ein Polyol,
- mindestens ein Polyisocyanat, und
- mindestens eine Verbindung **V** mit aktivierten Methylengruppen der Formel (II), 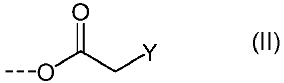 wobei Y für einen Rest der Formel ---CN, 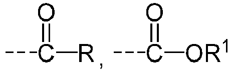 oder 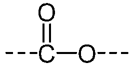 steht, R für einen einwertigen Kohlenwasserstoffrest mit 1 bis 10 C-Atomen steht und R¹ für einen Alkylrest mit 1 bis 6 C-Atomen steht,
wobei bezogen auf die gesamte Zusammensetzung das Verhältnis der Anzahl Isocyanatgruppen zur Summe der Anzahl Aldimingruppen plus Hydroxylgruppen mindestens 0.9 beträgt und das Verhältnis der Anzahl aktivierte Methylengruppen der Formel (II) zur Anzahl Aldimingruppen der Formel (I) mindestens 1 beträgt.

2. Zusammensetzung gemäss Anspruch 1, **dadurch gekennzeichnet, dass** Z für einen über ein primäres oder sekundäres C-Atom gebundenen aliphatischen Kohlenwasserstoffrest mit 3 bis 11 C-Atomen oder für einen aromatischen oder heteroaromatischen fünf- oder sechsgliedrigen Ring, der gegebenenfalls substituiert und/oder anelliert ist und insgesamt 4 bis 25 C-Atome umfasst, steht,
wobei Z insbesondere ausgewählt ist aus der Liste bestehend aus 1-Propyl, 2-Propyl, 1-Butyl, 1-Pentyl, 1-Heptyl, 3-Heptyl, 1-Undecyl, Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 2,4,6-Trimethylphenyl, 2,4,5-Trimethoxyphenyl, 2,4,6-Trimethoxyphenyl, 3,4,5-Trimethoxyphenyl, 1-Naphthyl, 2-Naphthyl, 2-Furyl, 5-Methyl-2-furyl, Thiophen, Pyridin, Pyrrol und Chinolin.

3. Zusammensetzung gemäss einem der Ansprüche 1 oder 2, **dadurch gekennzeichnet, dass** das Aldimin L ein Aldimin der Formel (III a) ist, 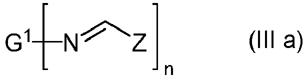
wobei n für 2 oder 3 steht und G¹ für einen zwei- oder dreiwertigen Polyoxyalkylen-Rest mit einem mittleren Molekulargewicht Mₙ von 800 bis 6'000 g/mol steht,
wobei das Aldimin der Formel (III a) insbesondere ausgewählt ist aus der Liste bestehend aus N,N'-Dibenzylidenpolyoxypropylendiaminen und N,N',N"-Tribenzylidenpolyoxypropylentriaminen und den analogen Aldiminen abgeleitet von Tolualdehyd, einem 4-C₁₀₋₁₄-Alkylbenzaldehyd-Gemisch, 4-Methoxybenzaldehyd und Furfural anstelle von Benzaldehyd.

4. Zusammensetzung gemäss einem der Ansprüche 1 oder 2, **dadurch gekennzeichnet, dass** das Aldimin L ein Aldimin der Formel (III b) ist, 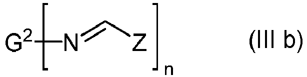
wobei n für 2 oder 3 steht und G² für einen n-wertigen organischen Rest mit 2 bis 25 C-Atomen steht,
wobei das Aldimin der Formel (III b) insbesondere ausgewählt ist aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Dibenzylidenisophorondiamin, N,N'-Dibenzyliden-4,4'-methylen-bis(cyclohexylamin), N,N'-Dibenzylidenpolyoxypropylendiaminen mit mittlerem Molekulargewicht Mₙ von 350 bis 750 g/mol und N,N',N"-Tribenzylidenpolyoxypropy-lentriaminen mit mittlerem Molekulargewicht Mₙ von 450 bis 700 g/mol, sowie den analogen Aldiminen abgeleitet von Tolualdehyd, einem 4-C₁₀₋₁₄-Alkyl-benzaldehyd-Gemisch, 4-Methoxybenzaldehyd und Furfural anstelle von Benzaldehyd.

5. Zusammensetzung gemäss einem der Anspruch 1 bis 4, **dadurch gekennzeichnet, dass** mindestens ein Polyol **P** mit einer OH-Zahl von 14 bis 280 mg KOH/g, bevorzugt 28 bis 112 mg KOH/g, enthalten ist.

6. Zusammensetzung gemäss Anspruch 5, **dadurch gekennzeichnet, dass** das Gewichtsverhältnis zwischen Aldiminen **L,** insbesondere Aldiminen der Formel (III b), und Polyolen **P** im Bereich von 2/98 bis 50/50, bevorzugt 3/97 bis 40/60, insbesondere 4/96 bis 30/70, liegt.

7. Zusammensetzung gemäss einem der Ansprüche 1 bis 6, **dadurch gekennzeichnet, dass** das Polyisocyanat einen NCO-Gehalt bezogen auf das Polyisocyanat von 8 bis 35 Gewichts-%, bevorzugt 10 bis 33 Gewichts-%, aufweist,
wobei das Polyisocyanat insbesondere ausgewählt ist aus bei Raumtemperatur flüssigen Oligomeren und Derivaten von 1,6-Hexandiisocyanat, Isophorondiisocyanat, 2,4(6)-Toluendiisocyanat und Diphenylmethandiisocyanat, und polymerem Diphenylmethandiisocyanat, wobei diese jeweils Umsetzungsprodukte mit Polyolen enthalten können.

8. Zusammensetzung gemäss einem der Ansprüche 1 bis 7, **dadurch gekennzeichnet, dass** die Verbindung **V** in Bezug auf die aktivierten Methylengruppen der Formel (II) ein Equivalentgewicht, oder im Fall einer oligomeren oder polymeren Verbindung **V** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **V** mittlere Funktionalität, von 1 bis 4, bevorzugt 1.5 bis 3.5, insbesondere 1.8 bis 3, aufweist.

9. Zusammensetzung gemäss einem der Ansprüche 1 bis 8, **dadurch gekennzeichnet, dass** bezogen auf die gesamte Zusammensetzung das Verhältnis der Anzahl aktivierte Methylengruppen der Formel (II) zur Anzahl Aldimingruppen der Formel (I) im Bereich von 1 bis 4, bevorzugt 1.2 bis 3, besonders bevorzugt 1.5 bis 2.5, liegt.

10. Zusammensetzung gemäss einem der Ansprüche 1 bis 9, **dadurch gekennzeichnet, dass** Y für einen Rest der Formel 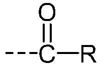 steht, wobei R bevorzugt für Methyl steht und die aktivierten Methylengruppen der Formel (II) somit Acetoacetatgruppen sind,
wobei die Verbindung **V** insbesondere ausgewählt ist aus der Liste bestehend aus Ethylacetoacetat, 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, dem Triacetoacetat von propoxyliertem und/oder ethoxyliertem Glycerin, Poly(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

11. Zusammensetzung gemäss einem der Ansprüche 1 bis 10, **dadurch gekennzeichnet, dass** mindestens ein weiterer Bestandteil ausgewählt aus Vernetzern, Katalysatoren, Trocknungsmitteln, Füllstoffen und Pigmenten enthalten ist.

12. Zusammensetzung gemäss einem der Ansprüche 1 bis 11, **dadurch gekennzeichnet, dass** die Zusammensetzung eine Komponente **K1** und eine Komponente **K2,** sowie optional eine Komponente **K3,** umfasst, welche jeweils für sich allein lagerstabil sind und in voneinander getrennten Gebinden gelagert werden.

13. Zusammensetzung gemäss Anspruch 12, **dadurch gekennzeichnet, dass** entweder
- Aldimine **L** und gegebenenfalls Polyole Bestandteil der Komponente **K1** sind, Polyisocyanate Bestandteil der Komponente **K2** sind und Verbindungen **V** entweder Bestandteil der Komponente **K2** sind oder als eigene Komponente **K3** vorliegen, oder dass
- Verbindungen **V** und gegebenenfalls Polyole Bestandteil der Komponente **K1** sind und Aldimine **L** und Polyisocyanate Bestandteil der Komponente **K2** sind.

14. Ausgehärtete Zusammensetzung erhalten aus der härtbaren Zusammensetzung gemäss einem der Ansprüche 1 bis 13 nach dem Vermischen der Inhaltsstoffe oder Komponenten und anschliessendem Aushärten.

15. Verwendung der härtbaren Zusammensetzung gemäss einem der Ansprüche 1 bis 13 als elastische oder zähelastische Beschichtung oder Klebstoff, wobei die Inhaltsstoffe oder Komponenten miteinander vermischt werden und die vermischte Zusammensetzung im flüssigen oder pastösen Zustand auf mindestens ein Substrat appliziert wird.
